# EUROPEAN PATENT APPLICATION

(11) **EP 4 848 800 A1**
(43) Date of publication of application: **02.12.2026**
(21) Application number: 24932789.1
(22) Date of filing: 28.03.2024
(51) Int. Cl.: H04W 28/02

(54) **INFORMATION TRANSMISSION METHOD AND DEVICE**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN)
(74) Representative: Taor, Simon Edward William
(86) International application number: PCT/CN2024/084513
(87) International publication number: WO 2025/199879

(57) **Abstract**

An information transmission method and a device are provided. The method includes the following. A first device sends first information to a terminal device, where the first information carries indication information for the terminal device to determine, according to the indication information, whether to perform information reporting or not to perform information reporting. As such, it is possible to avoid an ambient internet of things (A-IoT) device that has already successfully performed information reporting from performing information reporting for all first information.

## Description

### TECHNICAL FIELD

The disclosure relates to the field of communication, and more specifically, to an information transmission method and a device.

### BACKGROUND

In ambient internet of things (A-IoT) communication, power harvesting technology and backscattering technology are applied. An A-IoT device refers to an IoT device that is powered by various ambient energy sources, such as radio frequency (RF) energy, light energy, solar energy, thermal energy, and mechanical energy. A network device or an intermediate node sends query information, query repeat (QueryRep) information, paging information, or trigger information. If such information as the query information is received by an A-IoT device from the network side, the A-IoT device performs information reporting to the network side. Information reporting from a large number of A-IoT devices will easily cause network congestion and as a result, decrease transmission success rate.

### SUMMARY

Embodiments of the disclosure provide an information transmission method and a device, which can reduce system congestion and improve transmission success rate.

Embodiments of the disclosure provide an information transmission method. The method includes the following. A first device sends first information to a terminal device, where the first information carries indication information for the terminal device to determine, according to the indication information, whether to perform information reporting or not to perform information reporting.

Embodiments of the disclosure provide an information transmission method. The method includes the following. A terminal device receives first information sent by a first device, where the first information carries indication information. The terminal device determines, according to the indication information, whether to perform information reporting or not to perform information reporting.

Embodiments of the disclosure provide a first device. The first device includes a first transceiver unit. The first transceiver unit is configured to send first information to a terminal device, where the first information carries indication information for the terminal device to determine, according to the indication information, whether to perform information reporting or not to perform information reporting.

Embodiments of the disclosure provide a terminal device. The terminal device includes a second transceiver unit and a second processing unit. The second transceiver unit is configured to receive first information sent by a first device, where the first information carries indication information. The second processing unit is configured to determine, according to the indication information, whether to perform information reporting or not to perform information reporting.

Embodiments of the disclosure provide a first device. The first device includes a transceiver, a processor, and a memory. The memory is configured to store computer programs. The transceiver is configured to communicate with other devices. The processor is configured to invoke and execute the computer programs stored in the memory, to cause the first device to perform the information transmission method described above.

Embodiments of the disclosure provide a terminal device. The terminal device includes a transceiver, a processor, and a memory. The memory is configured to store computer programs. The transceiver is configured to communicate with other devices. The processor is configured to invoke and execute the computer programs stored in the memory, to cause the terminal device to perform the information transmission method described above.

Embodiments of the disclosure provide a chip. The chip is configured to implement the information transmission method described above. Specifically, the chip includes a processor. The processor is configured to invoke and execute computer programs from a memory, to cause a device equipped with the chip to perform the information transmission method described above.

Embodiments of the disclosure provide a computer-readable storage medium. The computer-readable storage medium is configured to store computer programs which, when executed by a device, are operable with the device to perform the information transmission method described above.

Embodiments of the disclosure provide a computer program product. The computer program product includes computer program instructions which are operable with a computer to perform the information transmission method described above.

Embodiments of the disclosure provide a computer program. The computer program, when executed by a computer, is operable with the computer is caused to perform the information transmission method described above.

In embodiments of the disclosure, the first information sent to the terminal device carries the indication information, and the terminal device can determine, according to the indication information, whether to perform information reporting or not to perform information reporting, which avoids a terminal devices that has already successfully reported information from performing information reporting for all first information, thereby reducing network congestion and improving transmission success rate.

### BRIEF DESCRIPTION OF THE DRAWINGS

FIG. 1 is a schematic structural diagram of an ambient internet of things (A-IoT) communication system.
FIG. 2 is a schematic diagram illustrating Topology 1 according to an embodiment of the disclosure.
FIG. 3 is a schematic diagram illustrating Topology 2 according to an embodiment of the disclosure.
FIG. 4 is a schematic flowchart of an information transmission method 400 according to an embodiment of the disclosure.
FIG. 5 is a schematic diagram illustrating information reporting in Embodiment 1 of the disclosure.
FIG. 6A is schematic diagram I illustrating information reporting in Embodiment 2 of the disclosure.
FIG. 6B is schematic diagram II illustrating information reporting in Embodiment 2 of the disclosure.
FIG. 7 is a schematic diagram illustrating information reporting in Embodiment 3 of the disclosure.
FIG. 8 is a schematic diagram illustrating information reporting in Embodiment 4 of the disclosure.
FIG. 9 is a schematic flowchart of an information transmission method 900 according to an embodiment of the disclosure.
FIG. 10 is a schematic block diagram of a first device according to an embodiment of the disclosure.
FIG. 11 is a schematic block diagram of a first device according to another embodiment of the disclosure.
FIG. 12 is a schematic block diagram of a terminal device according to an embodiment of the disclosure.
FIG. 13 is a schematic block diagram of a communication device according to embodiments of the disclosure.
FIG. 14 is a schematic block diagram of a chip according to embodiments of the disclosure.
FIG. 15 is a schematic block diagram of a communication system according to embodiments of the disclosure.

### DETAILED DESCRIPTION

The following will describe technical solutions of embodiments of the disclosure with reference to the accompanying drawings in embodiments of the disclosure.

The technical solutions of embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5^{th}-generation (5G) communication system, or other communication systems, etc.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

In an implementation, the communication system in embodiments of the disclosure may be applied to a carrier aggregation (CA) scenario, or may be applied to a dual connectivity (DC) scenario, or may be applied to a standalone (SA) network deployment scenario.

In an implementation, the communication system in embodiments of the disclosure is applicable to an unlicensed spectrum, and an unlicensed spectrum may be regarded as a shared spectrum. Or the communication system in embodiments of the disclosure is applicable to a licensed spectrum, and a licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

In embodiments of the disclosure, the network device may further include an access-network device and a core-network device. That is, the wireless communication system further includes multiple core networks for communicating with the access-network device. The access-network device may be an eNB or eNodeB in an LTE system, a new radio (NR) system, or an authorized auxiliary access LTE (LAA-LTE) system, a macro base station, a micro base station (also referred to as a "small base station"), a pico base station, an AP, a transmission point (TP), or a next-generation Node B (gNodeB), etc.

It should be understood that, in embodiments of the disclosure, a device with communication functions in a network/system can be referred to as a "communication device". The communication device may include a network device and a terminal device that have communication functions. The network device and the terminal device can be the devices in embodiments of the disclosure and will not be elaborated again herein. The communication device may further include other devices such as a network controller, a mobility management entity, or other network entities in the communication system, and embodiments of the disclosure are not limited in this regard.

It should be understood that, the terms "system" and "network" herein are usually used interchangeably throughout this disclosure. The term "and/or" herein only describes an association between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, *A* indicates *B* may mean that A directly indicates *B,* for instance, *B* can be obtained according to *A;* may mean that A indirectly indicates *B,* for instance, *A* indicates *C,* and *B* can be obtained according to *C;* or may mean that that there is an association between *A* and *B.*

In the elaboration of embodiments of the disclosure, the term "correspondence" may mean that there is a direct or indirect correspondence between the two, may mean that there is an association between the two, or may mean a relationship of indicating and indicated or configuring and configured, etc.

In order for better understanding of technical solutions of embodiments of the disclosure, the related art in embodiments of the disclosure will be described in detail below. The following related art as an optional scheme can be arbitrarily combined with the technical solutions of embodiments of the disclosure, which shall all belong to the protection scope of embodiments of the disclosure.

### I. Ambient internet of things (A-IoT)

In A-IoT communication, power harvesting technology and backscattering technology are applied. An A-IoT device refers to an IoT device powered by various ambient energy sources, such as radio frequency (RF) energy, light energy, solar energy, thermal energy, and mechanical energy. Such devices may have no energy storage capability or may have very limited energy storage capability (such as use of a capacitor with a capacity of tens of microfarads (µF)). An A-IoT device has many advantages, for example, free of conventional batteries, maintenance-free, small in size, low in complexity and cost, and having a long service life.

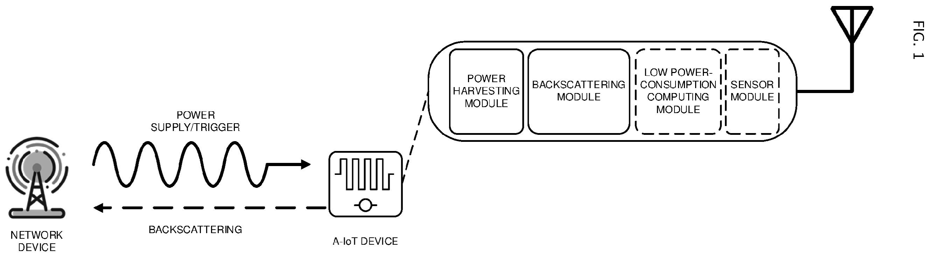

A-IoT consists of a network device and an A-IoT device, as illustrated in FIG. 1. FIG. 1 is a schematic structural diagram of an A-IoT communication system. The network device is configured to send a wireless power-supply signal and a downlink communication signal to the A-IoT device and receive backscattered signals from the A-IoT device. A basic A-IoT device includes an power harvesting module, a backscattering module, and a low power-consumption computing module. In addition, the A-IoT device can further include a memory or a sensor for storing some basic information (such as an item identity (ID)) or obtaining sensing data like ambient temperature and humidity.

### II. Cellular-based low-power IoT

The cellular IoT is developing rapidly. For example, the 3^{rd}-generation partnership project (3GPP) has standardized IoT technologies such as narrow band internet of things (NB-IoT), machine type communication (MTC), and reduced capability (RedCap). However, IoT communication requirements in many scenarios still cannot be satisfied by applying existing technologies, such as harsh communication environments (high temperature, extremely low temperature, high humidity, high pressure, high radiation, or high-speed movement, etc.), requirements for extremely small terminal forms, and extremely low costs, etc.

Therefore, to meet these IoT communication requirements that are not yet satisfied, for a cellular network, it is also necessary to develop ultra-low-cost, extremely small-sized, battery-free/maintenance-free loT, and A-IoT can exactly satisfy this requirement.

Based on discussion on A-IoT application scenarios in 3GPP system architecture (SA) 1, A-IoT can at least be applied to the following four types of scenarios:
Object recognition, such as logistics, management of products in a product line, and management of a supply chain;
Environmental monitoring, such as monitoring of working environment, temperature and humidity of natural environment, and toxic gas;
Positioning, such as indoor positioning, intelligent object search, and positioning of products in a product line;
Intelligent control, such as intelligent control of various electrical appliances (switching-on and switching-off of an air conditioner and temperature adjustment) in smart home, and intelligent control of various facilities (automatic pouring and fertilization) in an agricultural greenhouse.

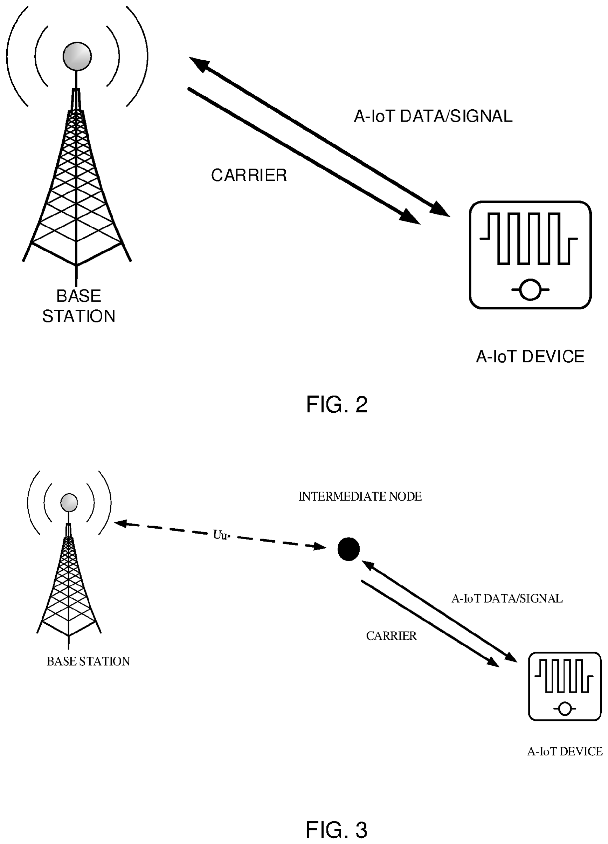

In cellular-based low-power IoT, an A-IoT device can receive carriers, data, or signals directly from a base station and send or backscatter data or channels to a base station, such as Topology 1 illustrated in FIG. 2. Alternatively, communication between an A-IoT device and a base station can be achieved via an intermediate node. In this case, the intermediate node sends carriers, data, or signals to the A-IoT device, and the A-IoT device sends or backscatters data or signals to the intermediate node, such as Topology 2 illustrated in FIG. 3. Here, the intermediate node can be a terminal device, a base station, or an integrated access and backhaul (IAB) node.

### III. Application of A-IoT device in logistics and warehousing scenarios

In logistics and warehousing application scenarios, a large number of packages/goods frequently need to be transferred, stored, loaded/unloaded, and inventoried at logistics stations or warehouses (spanning tens of thousands of square meters). With occurrence of warehouse ordering, goods inbound, goods management, and goods outbound, a massive amount of warehousing information is generated. Such information is typically characterized by frequent data-reading operations and large data volumes.

An A-IoT device has characteristics such as extremely low cost, small size, maintenance-free, durability, and long service life. In logistics and warehousing, by using A-IoT devices to record, store, and update goods information, and build A-IoT-based logistics and warehousing systems, it is possible to further reduce operational costs and significantly improve efficiency of logistics and warehousing management, which contributes to realization of smart logistics and smart warehousing.

Specifically, with A-IoT technology, it is possible to achieve smart warehousing management and improve warehouse efficiency and productivity through the following aspects.

Batch and large-scale reading: an A-IoT tag supports a greater amount of simultaneous reading and a larger reading/writing range. If goods arrive at the warehouse, wireless tags attached to the goods can be read in batch (e.g., reading thousands of tags per second) to obtain product information accurately, such as size/weight, manufacturer, expiration date, serial number, production line, etc. Wireless tags attached to goods or containers in the warehouse store basic information and location information of the goods in the warehouse. By deploying central network nodes in the warehouse, all goods in the warehouse can be identified promptly and quickly, which is conducive for managers to know inventory distribution and total volume promptly and realize rapid forecasting of storage needs.

Handling management: positioning and information updating of a tag can be realized. When goods are moved in the warehouse, a network device can promptly identify the goods and update tag information. If certain goods need to be picked, the location of the goods can be quickly pinpointed throughout the entire warehouse, thereby improving greatly goods sorting efficiency.

Taking a logistics or warehousing scenario as an example, if goods are inbound or outbound or inventory counting (or inventory stocktaking) is performed in the warehouse, a network device (such as a base station) or an intermediate node sends query information, query repeat (QueryRep) information, paging information, or trigger information, and an A-IoT device performs information reporting, for example, reports ID information corresponding to the A-IoT device, based on the query information, the QueryRep information, the paging information, or the trigger information. After the base station or the intermediate node obtains information reported by the A-IoT device, the base station or the intermediate node sends information indicating that the information has been received correctly, for example, sends acknowledgement (ACK) information. If query information, QueryRep information, paging information, or trigger information is sent only once by the network device or the intermediate node, it is unable to cause all A-IoT devices to perform reporting. Therefore, the network device or the intermediate node needs to send query information, QueryRep information, paging information, or trigger information multiple times to enable the A-IoT devices to perform information reporting. However, if an A-IoT device which has performed information reporting performs information reporting each time query information, QueryRep information, paging information, or trigger information is received, it can easily lead to system congestion and decrease transmission success rate. The same problem exists in other scenarios as well. Therefore, in an A-IoT system, how a terminal device performs information reporting is a technical problem to be solved.

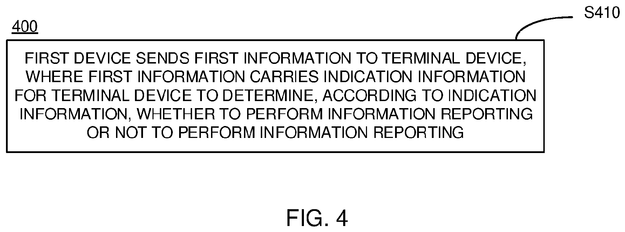

FIG. 4 is a schematic flowchart of an information transmission method 400 according to an embodiment of the disclosure. The method can optionally be applied to the system illustrated in any of FIG. 1 to FIG. 3, but is not limited thereto. The method includes at least some of the following content.

S410, a first device sends first information to a terminal device, where the first information carries indication information for the terminal device to determine, according to the indication information, whether to perform information reporting or not to perform information reporting.

The first information is used for the terminal device to perform information reporting, that is, the terminal device can determine, according to the indication information carried in the first information, whether to perform information reporting or not to perform information reporting. By determining, according to the indication information, whether to perform information reporting, the terminal device can perform information reporting only when necessary and not redundant, thereby reducing system congestion and improving transmission success rate.

In some examples, the terminal device includes an A-IoT device.

In some implementations, the first device includes a network device, or an intermediate node between a network device and the A-IoT device.

Taking Topology 1 as an example, the A-IoT device can communicate directly with a network device, and the first device includes a network device, that is, the network device sends the first information to the A-IoT device.

Taking Topology 2 as an example, the A-IoT device can communicate with a network device via an intermediate node, and the first device includes an intermediate node, that is, the intermediate node sends the first information to the A-IoT device. The intermediate node can at least be a terminal device, such as a mobile terminal device, a handheld terminal device, etc.

In some implementations, the first information includes one or more of: query information, QueryRep information, paging information, or trigger information.

In embodiments of the disclosure, the first information sent by the first device is used to trigger the terminal device to perform information reporting.

In some examples, to obtain states or information of A-IoT devices in an A-IoT system, the network device or the intermediate node can send the first information in multiple query rounds, and send the first information multiple times in each query round, so that all the A-IoT devices can perform information reporting. Durations corresponding to different query rounds can be the same or different.

In this case, the indication information carried in the first information can be used for the terminal device to determine, according to the indication information, whether the first information is first information that is initially transmitted in one query round. If the first information is first information that is initially transmitted, then the terminal device performs information reporting. If the first information is not first information that is initially transmitted, then the terminal device determines, based on whether reporting has been successfully performed in the query round, whether to perform information reporting or not to perform information reporting. For the indication information, there can be at least the following cases.

### Case 1

The indication information carried in the first information includes first indication information, where the first indication information indicates index information corresponding to the first information.

In some examples, the index information corresponding to the first information is associated with a query round which the first information belongs to. For example, the index information includes a sequence number or an index. Index information corresponding to each piece of first information in the same query round is the same, while index information corresponding to first information in different query rounds is different.

The terminal device can determine, according to the first indication information, whether the index information indicated by the first indication information is the same as index information indicated by first indication information in previous first information, and perform or not perform information reporting based on the determination result.

For example, in a case that an A-IoT device receives the first information, if the index information indicated by the first indication information in the first information is the same as the index information indicated by the first indication information in the previous first information, the A-IoT device can determine that the first information and the previous first information belong to the same query round, that is, the first information is not first information that is initially transmitted. If the index information indicated by the first indication information in the first information is different from the index information indicated by the first indication information in the previous first information, the A-IoT device can determine that the first information and the previous first information do not belong to the same query round, that is, the first information is first information that is initially transmitted.

If the index information indicated by the first indication information in the first information is different from the index information indicated by the first indication information in the previous first information, the A-IoT device can perform information reporting. Alternatively, if the index information indicated by the first indication information in the first information is the same as the index information indicated by the first indication information in the previous first information, and the A-IoT device has performed information reporting or has received ACK information before the first information, then the A-IoT device does not perform information reporting. Alternatively, if the index information indicated by the first indication information in the first information is the same as the index information indicated by the first indication information in the previous first information, and the A-IoT device has not performed information reporting or has not received ACK information before the first information, then the A-IoT device performs information reporting.

Here, the ACK information and the first information correspond to the same query round. For example, the ACK information corresponds to other first information, and the other first information and the first information currently received by the A-IoT device belong to the same query round, that is, first indication information in the other first information indicates the same index as the first indication information in the first information currently received by the A-IoT device.

### Case 2

The indication information carried in the first information includes second indication information, where the second indication information indicates whether the first information is first information that is initially transmitted.

In some examples, first information that is initially transmitted corresponds to first information transmitted for the first time in one query round.

In some examples, first information that is retransmitted corresponds to first information in one query round other than first information transmitted for the first time in the query round.

The terminal device can determine, according to the second indication information, whether the first information is first information that is initially transmitted.

For example, if the first information is first information that is initially transmitted, the A-IoT device performs information reporting. Alternatively, if the first information is not first information that is initially transmitted, and the A-IoT device has performed information reporting or has received ACK information before the first information, the A-IoT device does not perform information reporting. Alternatively, if the first information is not first information that is initially transmitted, and the A-IoT device has not performed information reporting or has not received ACK information before the first information, the A-IoT device performs information reporting.

Here, the ACK information and the first information correspond to the same query round. For example, the ACK information corresponds to other first information, and the other first information and the first information currently received by the A-IoT device belong to the same query round.

The second indication information can be implemented in various manners, for example, in at least one of the following Manner 1 or Manner 2.
(1) Manner 1: if a value of the second indication information is a first value, the first information is first information that is initially transmitted. Additionally or alternatively, if the value of the second indication information is a second value, the first information is not first information that is initially transmitted.
   For example, the first value is 1, and the second value is 0. Alternatively, the first value is 0, and the second value is 1.
(2) Manner 2: if the value of the second indication information toggles, it indicates that the first information is an initial transmission; if the value of the second indication information does not toggle, it indicates that the first information is not an initial transmission.

For example, if the second indication information in the first information is the same as second indication information in previous first information, the first information is first information that is retransmitted, that is, the first information is not first information that is initially transmitted. If the second indication information in the first information is different from the second indication information in the previous first information, the first information is first information that is initially transmitted.

When the A-IoT device receives the first information, the A-IoT device determines, based on the second indication information in the first information, whether the first information is first information that is initially transmitted in one query round.

If the first information is an initial transmission, the A-IoT device can perform information reporting. Alternatively, if the first information is not an initial transmission, and the A-IoT device has performed information reporting or has received ACK information before the first information, then the A-IoT device does not perform information reporting. Alternatively, if the first information is not an initial transmission, and the A-IoT device has not performed information reporting or has not received ACK information before the first information, then the A-IoT device performs information reporting.

Here, the ACK information and the first information correspond to the same query round. For example, the ACK information corresponds to other first information, and the other first information and the first information currently received by the A-IoT device belong to the same query round.

With regard to the two cases described above, namely, the case where the first information carries the first indication information or the case where the first information carries the second indication information, Embodiment 1 and Embodiment 2 are introduced in detail below with reference to the accompanying drawings. In Embodiment 1 and Embodiment 2, the first information is exemplarily query information for illustration.

### Embodiment 1

The query information includes the first indication information, where the first indication information indicates a sequence number or an index corresponding to the query information.

For example, the first indication information includes sequence number information or index information, which indicates the sequence number or the index corresponding to the query information. The range of the sequence number or the index is [0, *A*-1], where A is a positive integer, and the value of *A* is determined based on protocol predefinition or network configuration information.

For example, for query information sent in multiple query rounds, query information in different query rounds corresponds to different sequence numbers, while query information in the same query round corresponds to the same sequence number. Durations corresponding to different query rounds can be the same or different. Based on sequence number information in query information received, an A-IoT device can determine a query round corresponding to the query information. For a specific query round, a network or an intermediate node sends query information multiple times, and the query information sent multiple times corresponds to the same sequence number. If an A-IoT device receives one piece of query information, and the A-IoT device has not successfully performed information reporting or has not received ACK information sent by the network in the query round, then the A-IoT device performs information reporting. If the A-IoT device receives ACK information, it indicates that the base station or the intermediate node has successfully received information reported by the A-IoT device. In this case, if the A-IoT device receives query information having the same sequence number, the A-IoT device no longer performs information reporting. The A-IoT device will perform information reporting only if the A-IoT device receives query information having a different sequence number.

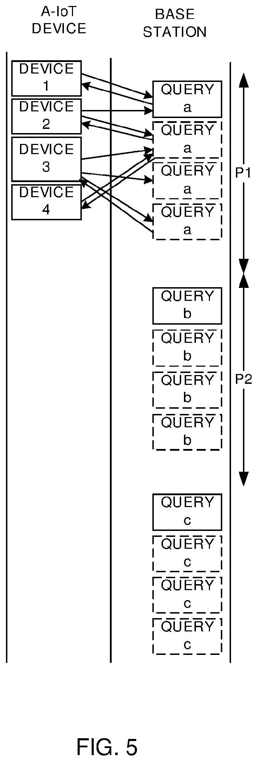

FIG. 5 is a schematic diagram illustrating information reporting in Embodiment 1 of the disclosure. As illustrated in FIG. 5, a base station sends query information for multiple query rounds. Durations corresponding to different query rounds are the same or different. *P*1 and *P*2 illustrated in FIG. 5 represent durations corresponding to two different query rounds. Query information sent in different query rounds corresponds to different sequence numbers. In FIG. 5, sequence numbers corresponding to query information sent in three query rounds are *a, b,* and *c* respectively. In each query round, the base station sends query information multiple times, and query information in each query round corresponds to the same sequence number. As illustrated in FIG. 5, in the first query round, query information corresponds to sequence number a. The base station sends the query information four times in this query round, and sequence numbers corresponding to the query information are all a. A system includes four A-IoT devices. When the base station sends query information a for the first time, in response to query information a, Device 1 and Device 2 perform information reporting to the network. Device 1 receives ACK information sent by the network, which indicates that information reported by Device 1 has been correctly received by the network, but information reported by Device 2 has not been correctly received by the network. When the network sends query information a for the second time, Device 1 does not need to perform information reporting, Device 2 still performs information reporting to the network, and Device 3 and Device 4 also perform information reporting to the network. Then Device 2 and Device 4 receives ACK information sent by the network, but Device 3 does not receive ACK information. Therefore, when the network sends query information a for the third time, Device 3 still needs to perform information reporting. Since Device 3 has not yet received ACK information, in response to sending, by the network, query information a for the fourth time, Device 3 still performs information reporting and then receives ACK information, which indicates that the network has correctly received information reported. Since the network device has correctly received information reported by all the A-IoT devices, in this query round, the network device no longer needs to send query information *a.* In next query round, the network sends query information *b*, and in this case, all the A-IoT devices still need to perform information reporting. The specific reporting process is similar to that in the first query round and will not be repeated herein.

In embodiments of the disclosure, sequence numbers corresponding to query information sent in two adjacent query rounds can be consecutive or non-consecutive. For example, a sequence number corresponding to query information in a *k*^{th} query round is a, and a sequence number corresponding to query information in a (*k*+1)^{th} query round is b, where *b* = *a*+1, or the difference between b and a is greater than 1.

By including a sequence number or an index in query information, the A-IoT device can determine, according to the sequence number or the index, whether the A-IoT device has successfully reported information for the query information corresponding to the sequence number. As such, the A-IoT device does not need to perform information reporting for each piece of query information, which avoids performing information reporting by a large number of A-IoT devices at the same time, thereby avoiding network congestion and improving success rate of information reporting.

### Embodiment 2

The query information includes the second indication information, where the second indication information indicates whether the query information is an initial transmission. In this embodiment, initial transmission, retransmission, etc. can all be defined for a single query round; that is, "initial transmission" means initially transmitted in one query round, and "retransmission" means retransmitted in one query round.

The second indication information is carried in the query information to indicate whether the query information is an initial transmission or indicate whether the query information is an initial transmission or a retransmission. For example, the second indication information is a new transmission indicator with a length of 1 bit. If the bit has a first value (e.g., the value is 1), it indicates initial transmission or transmission for the first time. If the bit has a second value (e.g., the value is 0), it indicates retransmission. For another example, if the value of the bit toggles, that is, changes from 0 to 1 or from 1 to 0, it indicates that the query information is an initial transmission. If the value of the bit does not toggle, it indicates that the query information is a retransmission.

For an A-IoT device, in a case that the A-IoT device has performed information reporting in response to a certain piece of query information and has received ACK information, if the A-IoT device then receives a retransmission of the query information, the A-IoT device will not perform information reporting; if the query information received is an initial transmission, the A-IoT device will perform information reporting.

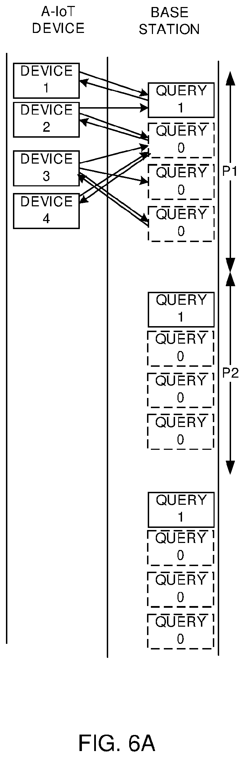

FIG. 6A is schematic diagram I illustrating information reporting in Embodiment 2 of the disclosure. As illustrated in FIG. 6A, a base station sends query information for multiple query rounds. Durations corresponding to different query rounds are the same or different. *P*1 and *P*2 illustrated in FIG. 6A represent durations corresponding to two different query rounds. In each query round, the base station sends query information multiple times. In this example, second indication information in query information that is initially transmitted has a value of 1, and second indication information in query information that is retransmitted has a value of 0. An A-IoT device can determine, according to second indication information in query information, whether the query information is an initial transmission. If the query information is an initial transmission, the A-IoT device performs information reporting. If the query information is a retransmission, the A-IoT device determines, according to whether the A-IoT device has performed information reporting and/or whether the A-IoT device has received ACK information sent by a network, whether to perform information reporting.

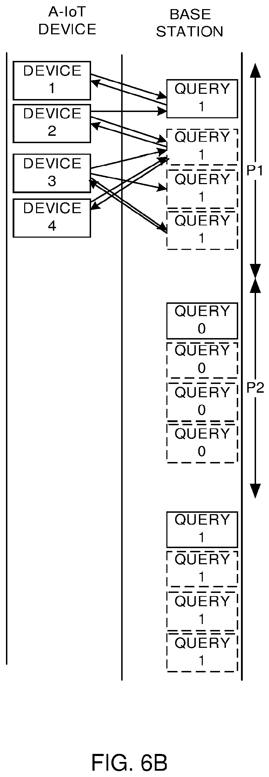

FIG. 6B is schematic diagram II illustrating information reporting in Embodiment 2 of the disclosure. As illustrated in FIG. 6B, a base station sends query information for multiple query rounds. Durations corresponding to different query rounds are the same or different. *P*1 and *P*2 illustrated in FIG. 6B represent durations corresponding to two different query rounds. In each query round, a base station sends query information multiple times, and each piece of query information carries second indication information. In the example illustrated in FIG. 6B, second indication information carried in each piece of query information in the first query round has the same value (e.g., all with a value of 1). When the second query round starts, the value of second indication information carried in query information that is initially transmitted in the second query round toggles, that is, the value of the second indication information in the query information that is initially transmitted is different from the value of second indication information in previous query information. The value of the second indication information carried in the query information that is initially transmitted in the second query round toggles to 0. Subsequently, the value of second indication information carried in query information that is retransmitted in the second query round remains unchanged, i.e., the value is 0. Then, the value of second indication information carried in query information in the third query round toggles, and so on. An A-IoT device can determine, according to whether the value of the second indication information in the query information is the same as that of the second indication information in the previous query information, whether the query information is an initial transmission. If the query information is an initial transmission, the A-IoT device performs information reporting. If the query information is a retransmission, and the A-IoT device has performed information reporting before the first information, then the A-IoT device does not perform information reporting. If the query information is a retransmission, and the A-IoT device has received ACK information before the first information, then the A-IoT device does not perform information reporting. If the query information is a retransmission, and the A-IoT device has not performed information reporting before the first information, then the A-IoT device performs information reporting. If the query information is a retransmission, and the A-IoT device has performed information reporting before the first information but has not received ACK information, then the A-IoT device performs information reporting.

By including indication information in the query information to indicate whether the query information is an initial transmission, the A-IoT device can determine whether the A-IoT device has performed information reporting for the set of query information, which avoids performing information reporting for every piece of query information, thereby avoiding network congestion and improving success rate of information reporting.

In addition, Embodiment 1 and Embodiment 2 can be applied in combination. That is, both the first indication information and the second indication information are carried in the query information.

In the foregoing embodiments, the first indication information and the second indication information can be carried explicitly. For example, an information field(s) corresponding to the first indication information and/or the second indication information is included in the query information. In other implementations of the disclosure, the first indication information and/or the second indication information can be carried implicitly. For example, the query information is carried by a sequence, where the sequence is generated based on the first indication information and/or the second indication information.

In some implementations, the first device sends the first information to the terminal device as follows. The first device determines a first sequence corresponding to the first information. The first device sends the first sequence to the terminal device.

The first device can determine the first sequence corresponding to the first information based on one or more of the following:
(1) first indication information, where the first indication information indicates index information corresponding to the first information;
(2) second indication information, where the second indication information indicates whether the first information is first information that is initially transmitted;
(3) information of a time-domain resource where the first information is located; or
(4) a type of the first information.

Here, for the determination manner and related content for the first indication information and the second indication information, reference can be made to the foregoing Embodiment 1 and Embodiment 2, which are not repeated herein.

The information of a time-domain resource where the first information is located can include period information corresponding to the query information, round information corresponding to the query information, and/or slot information corresponding to the query information.

The type of the first information includes one or more of: inbound inventory counting information, outbound inventory counting information, or stock inventory counting information.

For example, query information for inbound inventory counting, query information for outbound inventory counting, or query information for stock inventory counting correspond to different sequences respectively. Based on the query information received, the A-IoT device can determine a corresponding inventory-counting type, or the A-IoT device performs sequence detection with regard to the type of inventory counting that is to be performed.

For example, an inbound inventory counting sequence includes sequence a, an outbound inventory counting sequence includes sequence b, and a stock inventory counting sequence includes sequence c. Based on a sequence detected, the A-IoT device can determine whether the sequence corresponds to inbound inventory counting, corresponds to outbound inventory counting, or corresponds to stock inventory counting.

In the foregoing implementations, the first device (such as a network device or an intermediate node) sends the first information (such as one or more of query information, QueryRep information, paging information, or trigger information) in multiple query rounds, and sends multiple pieces of first information in each query round. The first device carries indication information in the first information. Based on the indication information, the A-IoT device can determine whether the first information received is first information that is initially transmitted in one query round, and then determine whether to perform information reporting.

In the following implementations, a different design approach is proposed. Specifically, the indication information carried in the first information includes first ID information, where the first ID information corresponds to one or more terminal devices. After receiving the first information, the terminal device determines, according to the indication information, whether to perform information reporting or not to perform information reporting. For example, the terminal device receives the first information and determines whether the first ID information carried in the first information corresponds to the terminal device. If the first ID information carried in the first information corresponds to the terminal device, the terminal device performs information reporting. Additionally or alternatively, if the first ID information carried in the first information does not correspond to the terminal device, the terminal device does not perform information reporting.

In order for the terminal device to know first ID information corresponding to the terminal device itself, the first device can send first configuration information to the terminal device. The first configuration information is used for the terminal device to determine the first ID information corresponding to the terminal device. Alternatively, the terminal device can determine the first ID information corresponding to the terminal device based on protocol-predefined information or pre-configured information.

In some examples, the first device can send the first configuration information to the terminal device, where the first configuration information directly indicates the first ID information corresponding to the terminal device.

In other examples, the first device can send the first configuration information to the terminal device, where the first configuration information indicates a manner for determining the first ID information corresponding to the terminal device. The terminal device receives the first configuration information sent by the first device and determines the first ID information corresponding to the terminal device according to the first configuration information. For example, the terminal device determines the first ID information corresponding to the first terminal device in the determination manner indicated by the first configuration information.

The first ID information can be determined according to ID information of the terminal device. That is, the first device determines the first ID information corresponding to the terminal device according to the ID information of the terminal device. For example, the first device determines first ID information corresponding to one or more devices according to ID information of the one or more terminal devices. After receiving the first configuration information, the terminal device can determine the first ID information corresponding to the terminal device by using the ID information of the terminal device and adopting the determination manner indicated by the first configuration information.

The ID information of the terminal device has at least one information field. The first ID information can be determined according to some or all of the information fields of the ID information of the terminal device and/or according to some or all bits in some or all of the information fields of the ID information of the terminal device.

For example, the first configuration information indicates one or more of: a first information field in the ID information of the terminal device for determining the first ID information or one or more bits in the first information field.

For example, the first configuration information carries *N* pieces of information. The *N* pieces of information are in one-to-one correspondence with *N* information fields in the ID information of the terminal device, and each piece of information indicates a bit in a corresponding information field, where the bit is used for determining the first ID information. Here, *N* is a positive integer. *N* can be equal to or less than the number of information fields of the ID information of the terminal device.

In some implementations, terminal devices in a system can be grouped, where terminal devices in the same group correspond to the same first ID information, thereby configuring terminal devices corresponding to each piece of first ID information. For example, A-IoT devices in the system are classified into two device groups: a first device group and a second device group. First ID information corresponding to A-IoT devices in the first device group is information *A,* and first ID information corresponding to A-IoT devices in the second device group is information *B.* The first device can configure corresponding first ID information for each terminal device. When sending the first information, the first device carries first ID information in the first information. When a terminal device receives the first information, the terminal device obtains the first ID information carried in the first information and determines whether the first ID information is the same as first ID information corresponding to the terminal device (the first ID information corresponding to the terminal device can be configured via first configuration information received by the terminal device). If the first ID information carried in the first information is the same as the first ID information corresponding to the terminal device, the terminal device performs information reporting. If the first ID information carried in the first information is different from the first ID information corresponding to the terminal device, the terminal device does not perform information reporting.

By carrying first ID information in the first information, the first device can control some of terminal devices in the system corresponding to the first ID information to perform information reporting. As such, it is possible to avoid performing information reporting by an excessive number of terminal devices at the same time, thereby reducing system congestion and improving transmission success rate.

With regard to the foregoing approach, namely the manner in which the first information carries the first ID information, Embodiment 3 is described in detail below with reference to the accompanying drawings. In Embodiment 3, the first information is exemplarily query information for illustration.

### Embodiment 3

The query information carries the first ID information, and an A-IoT device determines, based on the first ID information, whether information reporting is required.

Here, the first ID information can include ID information corresponding to the A-IoT device. For example, the first ID information is the ID information of the A-IoT device, or the first ID information is determined based on the ID information of the A-IoT device.

For example, the ID information of the A-IoT device has a length of *L*1, and the first ID information has a length of *L*2, where *L*2 < *L*1. The first ID information corresponds to the first *L*2 bits in the ID information of the A-IoT device, that is, all A-IoT devices having the same first *L*2 bits of the ID information correspond to the first ID information. When the A-IoT devices receive query information containing the first ID information, the A-IoT devices all perform information reporting. In this case, the first ID information corresponds to groupcast ID information or multicast ID information.

For another example, the ID information of the A-IoT device has a length of *L*1, and the first ID information has a length of *L*2, where *L*2 < *L*1. The ID information of the A-IoT device has *N* information fields. *L*2 bits corresponding to the first ID information consist of all or some bits in at least one information field in the ID information of the A-IoT device.

For example, the ID information of the A-IoT device has two information fields, where the two information fields correspond to service ID information and device-specific ID information respectively. In this case, the first ID information can include all or some information in the device-specific ID information, or the first ID information can include all or some information in the service ID information and all or some information in the device-specific ID information.

For example, the ID information of the A-IoT device has two information fields, where the two information fields correspond to group ID information and device-specific ID information respectively. In this case, the first ID information can include all or some information in the device-specific ID information, or the first ID information can include all or some information in the group ID information and all or some information in the device-specific ID information.

For example, the ID information of the A-IoT device has three information fields, where the three information fields correspond to service ID information, group ID information, and device-specific ID information respectively. In this case, the first ID information can include all or some information in the device-specific ID information, or the first ID information can include all or some information in the group ID information and all or some information in the device-specific ID information, or the first ID information can include all or some information in the service ID information and all or some information in the device-specific ID information, or the first ID information can include all or some information in the service ID information, all or some information in the group ID information, and all or some information in the device-specific ID information.

In some examples, a network configures corresponding first ID information for each A-IoT device. Different A-IoT devices can correspond to different first ID information, or can correspond to the same first ID information. For instance, the network device configures corresponding first ID information for an A-IoT device, and sends the first ID information directly to the A-IoT device or sends the first ID information to the A-IoT device via an intermediate node.

When an A-IoT device receives query information containing first ID information, the A-IoT device determines, based on whether the first ID information is first ID information corresponding to the A-IoT device, whether information reporting is required. If the first ID information is the first ID information corresponding to the A-IoT device, the A-IoT device performs information reporting. If the first ID information is not the first ID information corresponding to the A-IoT device, the A-IoT device does not perform information reporting.

The A-IoT device can determine the first ID information corresponding to the A-IoT device based on the first configuration information, protocol-predefined information, or pre-configured information. The first configuration information can be sent to the A-IoT device by the first device (e.g., a network device). The network device can send the first configuration information directly to the A-IoT device, or send the first configuration information to the A-IoT device via an intermediate node.

For example, the network device sends the first configuration information, where the first configuration information indicates a manner for determining the first ID information.

For example, the ID information of the A-IoT device has *N* information fields. In this case, the first configuration information includes *N* values indicating, in each of the *N* information fields in the first ID information, the number of bits used to determine the first ID information.

In an example, the ID information of the A-IoT device has *N* information fields. The first information indicates that the first ID information is determined based on *M* information fields in the *N* information fields, and/or the first information indicates that the first ID information is determined based on *Km* bits in an information field. Here, *m* = 1, 2, ..., *M,* or *m* = 1, 2, *..., N. Km* represents the number of bits in an *m*^{th} information field. The *Km* bits can correspond to *Km* bits from left to right in the *m*^{th} information field, i.e., the *Km* most significant bits (MSBs), or can correspond to *Km* bits from right to left in the *m*^{th} information field, i.e., the *Km* least significant bits (LSBs). For different *m,* values of *Km* can be the same or different.

For example, the ID information of the A-IoT device has one information field. The first information indicates that the first ID information is determined based on one information field in the one information field, and *K*1 = 10. In an implementation, the first information indicates a value, that is, 10, which indicates the number of bits in the information field in the first ID information.

For example, the ID information of the A-IoT device has two information fields. The first information indicates that the first ID information is determined based on the 2^{nd} information field in the two information fields and the first ID information includes the first 10 bits in the 2^{nd} information field, that is, *K*2=10. In an implementation, the first information indicates two values: 0 and 10. The 1^{st} value, namely 0, indicates the number of bits in the 1^{st} information field in the first ID information, and the 2^{nd} value, namely 10, indicates the number of bits in the 2^{nd} information field in the first ID information.

For example, the ID information of the A-IoT device has two information fields. The first information indicates that the first ID information is determined based on the 1^{st} information field in the two information fields and the first ID information includes the first 4 bits in the 1^{st} information field, that is, *K*1=4. In an implementation, the first information indicates two values: 4 and 0. The 1^{st} value, namely 4, indicates the number of bits in the 1^{st} information field in the first ID information, and the 2^{nd} value, namely 0, indicates the number of bits in the 2^{nd} information field in the first ID information.

For example, the ID information of the A-IoT device has two information fields. The first information indicates that the first ID information is determined based on the two information fields and the first ID information includes the first 4 bits in the 1^{st} information field and the first 10 bits in the 2^{nd} information field, that is, *K*1=4, *K*2=10. In an implementation, the first information indicates two values: 4 and 10. The 1^{st} value, namely 4, indicates the number of bits in the 1^{st} information field in the first ID information, and the 2^{nd} value, namely 10, indicates the number of bits in the 2^{nd} information field in the first ID information.

Terminal devices in a system can be grouped. Terminal devices in the same group correspond to the same first ID information, thereby configuring terminal devices corresponding to each piece of first ID information. For example, A-IoT devices in the system are classified into two device groups: a first device group and a second device group. First ID information corresponding to A-IoT devices in the first device group is information A, and first ID information corresponding to A-IoT devices in the second device group is information B. The first device can configure corresponding first ID information for each terminal device. When sending the first information, the first device carries first ID information in the first information. When a terminal device receives the first information, the terminal device obtains the first ID information carried in the first information and determines whether the first ID information is the same as first ID information corresponding to the terminal device (the first ID information corresponding to the terminal device is configured via first configuration information received by the terminal device). If the first ID information in the first information is the same as the first ID information corresponding to the terminal device, the terminal device performs information reporting. If the first ID information in the first information is different from the first ID information corresponding to the terminal device, the terminal device does not perform information reporting.

For example, a network device groups the A-IoT devices in the system and sends first configuration information to each A-IoT device in the system. The first configuration information indicates first ID information corresponding to each A-IoT device.

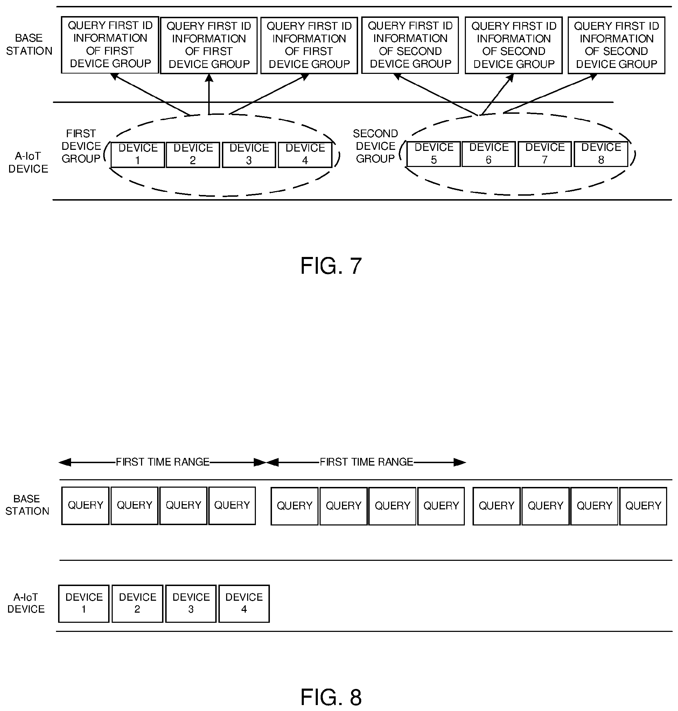

In the example illustrated in FIG. 7, A-IoT devices in a system are classified into two device groups: a first device group and a second device group, which correspond to different first ID information. Query information sent by a base station carries first ID information. After an A-IoT device receives the query information sent by the base station, the A-IoT device determines whether the first ID information carried in the query information is the same as first ID information corresponding to the A-IoT device. If the first ID information carried in the query information is the same as the first ID information corresponding to the A-IoT device, the A-IoT device performs information reporting. If the first ID information carried in the query information is different from the first ID information corresponding to the A-IoT device, the A-IoT device does not perform information reporting. In the example illustrated in FIG. 7, query information sent by the base station carries first ID information. If an A-IoT device(s) receives the query information sent by the base station, and the query information includes first ID information corresponding to the first device group (i.e., first ID information corresponding to A-IoT devices in the first device group), all four devices in the first device group perform information reporting, while devices in the second device group do not perform information reporting. If an A-IoT device(s) receives the query information sent by the base station, and the query information includes first ID information corresponding to the second device group (i.e., first ID information corresponding to the A-IoT devices in the second device group), all four devices in the second device group perform information reporting, while the devices in the first device group do not perform information reporting.

As can be seen, in this embodiment, ID information is carried in the query information. Only an A-IoT device(s) corresponding to or associated with the ID information performs reporting, while other A-IoT devices do not perform reporting, which can reduce system congestion and improve transmission success rate.

The following introduces a different design approach. In order to obtain states or information of A-IoT devices in an A-IoT system, a network device or an intermediate node sends the first information in multiple query rounds, and sends the first information multiple times in each query round. The first device sends second configuration information to a terminal device, where the second configuration information is used for the terminal device to determine a first time range. The first time range can be determined based on a time range corresponding to a query round. For example, the first time range can be equal to the time range corresponding to the query round. Based on the first time range, the terminal device can determine which pieces of first information received belong to the same query round, and accordingly determine whether to perform information reporting.

For example, the terminal device does not perform information reporting if the terminal device receives the first information within the first time range and has already performed information reporting within the first time range. The terminal device does not perform information reporting if the terminal device receives the first information within the first time range and has already received ACK information within the first time range. The terminal device performs information reporting if the terminal device receives the first information within the first time range and has not performed information reporting within the first time range. The terminal device performs information reporting if the terminal device receives the first information within the first time range and has not received ACK information within the first time range.

The following describes Embodiment 4 in detail with reference to the accompanying drawings. In Embodiment 4, the first information is exemplarily query information for illustration.

### Embodiment 4:

FIG. 8 is a schematic diagram illustrating information reporting in Embodiment 4 of the disclosure. As illustrated in FIG. 8, a base station sends query information for multiple query rounds, and sends multiple pieces of query information in each query round. The network side sends the second configuration information to an A-IoT device. The A-IoT device determines a first time range corresponding to each query round based on the second configuration information. For example, the second configuration information carries a duration of each query round. For each query round, the A-IoT device determines a first time range for the query round based on a duration of the query round and a starting position of the query round. For instance, the A-IoT device can take a specific position (such as a starting position or an ending position) of a time unit/time-domain resource corresponding to signaling carrying the second configuration information as a starting position of one query round.

The network device sends the second configuration information, and the A-IoT device determines the first time range based on the second configuration information.

For example, the second configuration information is used to configure a periodicity value for sending query information periodically. The first time range corresponds to one period. Within the first time range, the network device can send query information multiple times, and the A-IoT device determines, within the first time range, whether information reporting is required for the query information received.

As illustrated in FIG. 8, the A-IoT device determines the first time range based on the second configuration information. If the A-IoT device has performed information reporting or has received ACK information sent by the network within the first time range, the A-IoT device no longer needs to perform information reporting; otherwise, the A-IoT device needs to perform information reporting.

For example, as illustrated in FIG. 8, the A-IoT device can determine the first time range based on the second configuration information. The base station sends multiple pieces of query information within the first time range. The A-IoT device performs information reporting in response to the query information. If the A-IoT device receives ACK information sent by the network, it indicates that information reported by the A-IoT device has been correctly received by the network. If the A-IoT device receives query information again within the first time range, the A-IoT device does not need to perform information reporting; otherwise, the A-IoT device needs to perform information reporting.

In this embodiment, if the A-IoT device has successfully reported information within the first time range, the A-IoT device no longer needs to perform information reporting within the first time range, which avoids network congestion and improves success rate of information reporting.

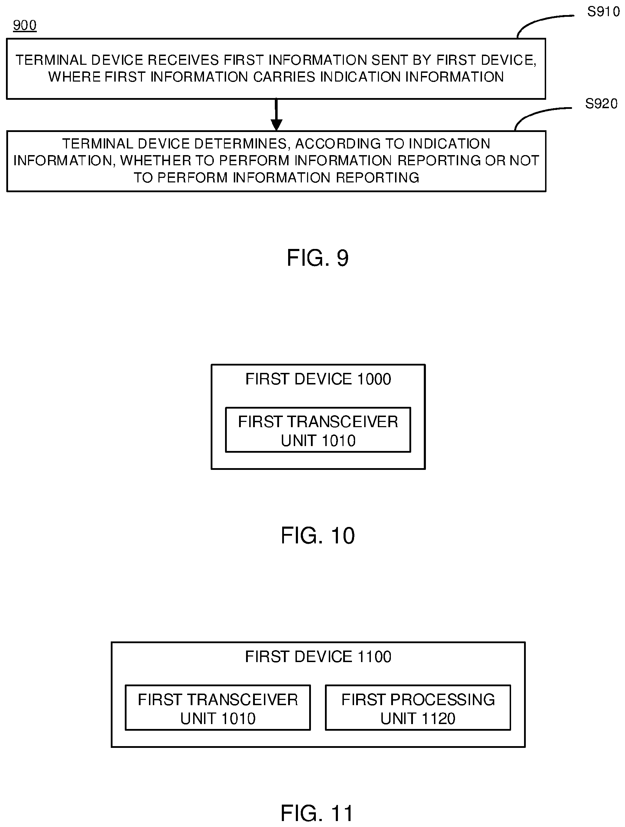

Embodiments of the disclosure further provide an information transmission method. FIG. 9 is a schematic flowchart of an information transmission method 900 according to an embodiment of the disclosure. The method can optionally be applied to the system illustrated in FIG. 1, FIG. 2, or FIG. 3, but is not limited thereto. The method includes at least some of the following content.

S910, a terminal device receives first information sent by a first device, where the first information carries indication information.

S920, the terminal device determines, according to the indication information, whether to perform information reporting or not to perform information reporting.

In some implementations, the indication information includes first indication information, and the first indication information indicates index information corresponding to the first information.

In some implementations, the indication information includes second indication information, and the second indication information indicates whether the first information is first information that is initially transmitted.

In some implementations, the first device sends the first information in multiple query rounds, and sends the first information multiple times in each query round, so that all A-IoT devices can perform information reporting. Durations corresponding to different query rounds can be the same or different.

In some implementations, the index information corresponding to the first information is associated with a query round which the first information belongs to. For example, the index information includes a sequence number or an index. Index information corresponding to each first information in the same query round is the same, while index information corresponding to first information in different query rounds is different.

The terminal device can determine, according to the first indication information, whether the index information indicated by the first indication information is the same as index information indicated by first indication information in previous first information, and perform or not perform information reporting based on a determination result.

For example, in a case that an A-IoT device receives the first information, if the index information indicated by the first indication information in the first information is the same as the index information indicated by the first indication information in the previous first information, it can be determined that the first information and the previous first information belong to the same query round, that is, the first information is not first information that is initially transmitted. If the index information indicated by the first indication information in the first information is different from the index information indicated by the first indication information in the previous first information, it can be determined that the first information and the previous first information do not belong to the same query round, that is, the first information is first information that is initially transmitted.

In some implementations, the terminal device performs information reporting or not performs information reporting based on the determination result as follows. The terminal device performs information reporting if the determination result indicates that the index information indicated by the first indication information in the first information is different from the index information indicated by the first indication information in the previous first information. Alternatively, the terminal device does not perform information reporting if the determination result indicates that the index information indicated by the first indication information in the first information is the same as the index information indicated by the first indication information in the previous first information and the terminal device has already performed information reporting before the first information. Alternatively, the terminal device does not perform information reporting if the determination result indicates that the index information indicated by the first indication information in the first information is the same as the index information indicated by the first indication information in the previous first information and the terminal device has already received ACK information before the first information. Alternatively, the terminal device performs information reporting if the determination result indicates that the index information indicated by the first indication information in the first information is the same as the index information indicated by the first indication information in the previous first information and the terminal device has not performed information reporting before the first information. Alternatively, the terminal device performs information reporting if the determination result indicates that the index information indicated by the first indication information in the first information is the same as the index information indicated by the first indication information in the previous first information and the terminal device has not received ACK information before the first information.

Here, the ACK information and the first information correspond to the same query round. For example, the ACK information corresponds to other first information, and the other first information and the first information currently received by the A-IoT device belong to the same query round.

In some implementations, the second indication information indicates whether the first information is first information that is transmitted for the first time in one query round.

In some implementations, if a value of the second indication information is a first value, the first information is first information that is initially transmitted. Additionally or alternatively, if the value of the second indication information is a second value, the first information is not first information that is initially transmitted.

In some implementations, if the second indication information in the first information is the same as second indication information in previous first information, the first information is not first information that is initially transmitted. Additionally or alternatively, if the second indication information in the first information is different from the second indication information in the previous first information, the first information is first information that is initially transmitted.

In some implementations, the first information that is initially transmitted corresponds to first information transmitted for the first time in one query round.

In some implementations, the terminal device determines, according to the indication information, whether to perform information reporting or not to perform information reporting as follows. The terminal device performs information reporting if the first information is first information that is initially transmitted. Alternatively, the terminal device does not perform information reporting if the first information is not first information that is initially transmitted and the terminal device has already performed information reporting before the first information. Alternatively, the terminal device does not perform information reporting if the first information is not first information that is initially transmitted and the terminal device has already received ACK information before the first information. Alternatively, the terminal device perform information reporting if the first information is not first information that is initially transmitted and the terminal device has not performed information reporting before the first information. Alternatively, the terminal device performs information reporting if the first information is not first information that is initially transmitted and the terminal device has not received ACK information before the first information;

The ACK information and the first information correspond to the same query round. For example, the ACK information corresponds to other first information, and the other first information and the first information currently received by the A-IoT device belong to the same query round.

In some implementations, the first indication information and/or the second indication information can be indicated implicitly. For example, the terminal device receives the first information sent by the first device as follows. The terminal device receives a first sequence sent by the first device, where the first sequence corresponds to the first information.

In some implementations, the first sequence is determined based on one or more of: first indication information, second indication information, information of a time-domain resource where the first information is located, or a type of the first information. The first indication information indicates index information corresponding to the first information. The second indication information indicates whether the first information is first information that is initially transmitted.

In some implementations, the type of the first information includes one or more of inbound inventory counting information, outbound inventory counting information, or stock inventory counting information.

In some implementations, the indication information includes first ID information, and the first ID information corresponds to one or more terminal devices.

In some implementations, the terminal device determines, according to the indication information, whether to perform information reporting or not to perform information reporting as follows. The terminal device determines whether the first ID information corresponds to the terminal device. The terminal device performs information reporting if the first ID information corresponds to the terminal device; and/or the terminal device does not perform information reporting if the first ID information does not correspond to the terminal device.

In some implementations, the method further includes the following. The terminal device receives first configuration information sent by the first device. The terminal device determines first ID information corresponding to the terminal device according to the first configuration information.

In some implementations, the first configuration information indicates a manner for determining the first ID information.

In some implementations, the first configuration information indicates one or more of: a first information field in ID information of the terminal device or one or more bits in the first information field. The first information field is used for determining the first ID information. The ID information of the terminal device has at least one information field.

In some implementations, the first configuration information carries *N* pieces of information, the *N* pieces of information are in one-to-one correspondence with *N* information fields in the ID information of the terminal device, and each piece of information indicates a bit in a corresponding information field, where the bit is used for determining the first ID information. *N* is a positive integer.

In some implementations, the method further includes the following. The terminal device receives second configuration information sent by the first device. The terminal device determines a first time range according to the second configuration information.

In some implementations, the terminal device determines, according to the indication information, whether to perform information reporting or not to perform information reporting as follows. The terminal device does not perform information reporting in a case that the terminal device receives the first information within the first time range and has already performed information reporting within the first time range. The terminal device does not perform information reporting in a case that the terminal device receives the first information within the first time range and has already received ACK information within the first time range. The terminal device performs information reporting in a case that the terminal device receives the first information within the first time range and has not performed information reporting within the first time range. The terminal device performs information reporting in a case that the terminal device receives the first information within the first time range and has not received ACK information within the first time range.

In some implementations, the terminal device includes an A-IoT device.

In some implementations, the first device includes a network device or an intermediate node.

In some implementations, the intermediate node includes a terminal device.

In some implementations, the first information includes one or more of query information, QueryRep information, paging information, or trigger information. Here, the first information can be used to trigger the terminal device to perform information reporting.

Based on indication information carried in query information, or based on a time range corresponding to a query round indicated by other means, the A-IoT device can determine whether the A-IoT device has already performed information reporting for the query information, which avoids an A-IoT devices that has already successfully reported information from performing reporting for all query information, thereby reducing system congestion and improving transmission success rate.

In embodiments of the disclosure, for the specific manner in which the terminal device performs the information transmission method, refer to the related content regarding the terminal device in the foregoing embodiments, and details are not described herein again.

FIG. 10 is a schematic block diagram of a first device 1000 according to an embodiment of the disclosure. The first device 1000 may include a first transceiver unit 1010. The first transceiver unit 1010 is configured to send first information to a terminal device, where the first information carries indication information for the terminal device to determine, according to the indication information, whether to perform information reporting or not to perform information reporting.

In some implementations, the indication information includes first indication information, and the first indication information indicates index information corresponding to the first information.

In some implementations, the indication information includes second indication information, and the second indication information indicates whether the first information is first information that is initially transmitted.

In some implementations, the first transceiver unit 1010 is configured to determine a first sequence corresponding to the first information; and send the first sequence to the terminal device.

In some implementations, the first transceiver unit 1010 is configured to determine the first sequence corresponding to the first information based on one or more of: first indication information, second indication information, information of a time-domain resource where the first information is located, or a type of the first information. The first indication information indicates index information corresponding to the first information. The second indication information indicates whether the first information is first information that is initially transmitted.

In some implementations, the type of the first information includes one or more of inbound inventory counting information, outbound inventory counting information, or stock inventory counting information.

In some implementations, the index information corresponding to the first information is associated with a query round which the first information belongs to.

In some implementations, if a value of the second indication information is a first value, the first information is first information that is initially transmitted. Additionally or alternatively, if the value of the second indication information is a second value, the first information is not first information that is initially transmitted.

In some implementations, if the second indication information in the first information is the same as second indication information in previous first information, the first information is first information that is retransmitted. Additionally or alternatively, if the second indication information in the first information is different from the second indication information in the previous first information, the first information is first information that is initially transmitted.

In some implementations, the first information that is initially transmitted corresponds to first information transmitted for the first time in one query round.

In some implementations, the first information that is retransmitted corresponds to first information in one query round other than first information transmitted for the first time in the query round.

In some implementations, the indication information includes first ID information, and the first ID information corresponds to one or more terminal devices.

In some implementations, if the first ID information corresponds to a terminal device which has received the first information, the terminal device performs information reporting.

In some implementations, if the first ID information does not correspond to a terminal device which has received the first information, the terminal device does not perform information reporting.

FIG. 11 is a schematic block diagram of a first device 1100 according to another embodiment of the disclosure. The first device 1100 can include a first transceiver unit 1010, and can further include a first processing unit 1120. The first processing unit 1120 is configured to determine the first ID information according to ID information of a terminal device.

In some implementations, the first transceiver unit 1010 is further configured to send first configuration information to the terminal device, where the first configuration information is used for the terminal device to determine first ID information corresponding to the terminal device.

In some implementations, the first configuration information indicates a manner for determining the first ID information.

In some implementations, the first configuration information indicates one or more of: a first information field in ID information of the terminal device; or one or more bits in the first information field, where the first information field is used for determining the first ID information. The ID information of the terminal device has at least one information field.

In some implementations, the first configuration information carries *N* pieces of information, the *N* pieces of information are in one-to-one correspondence with *N* information fields in the ID information of the terminal device, and each piece of information indicates a bit in a corresponding information field, where the bit is used for determining the first ID information, where *N* is a positive integer.

In some implementations, the first transceiver unit 1010 is further configured to send second configuration information to the terminal device, where the second configuration information is used for the terminal device to determine a first time range.

In some implementations, the second configuration information is used for the terminal device to determine whether to perform information reporting or not to perform information reporting in one or more of the following cases. The terminal device does not perform information reporting in a case that the terminal device receives the first information within the first time range and has already performed information reporting within the first time range. The terminal device does not perform information reporting in a case that the terminal device receives the first information within the first time range and has already received ACK information within the first time range. The terminal device performs information reporting in a case that the terminal device receives the first information within the first time range and has not performed information reporting within the first time range. The terminal device performs information reporting in a case that the terminal device receives the first information within the first time range and has not received ACK information within the first time range.

In some implementations, the terminal device includes an A-IoT device.

In some implementations, the first device includes a network device or an intermediate node.

In some implementations, the intermediate node includes a terminal device.

In some implementations, the first information includes one or more of query information, QueryRep information, paging information, or trigger information.

The first device 1000 and the first device 1100 in embodiments of the disclosure can implement corresponding functions of the first device in the foregoing method embodiments. For the procedure, function, implementation, and advantage corresponding to each module (sub-module, unit, or assembly, etc.) in the first device 1000 and the first device 1100, reference can be made to the corresponding illustrations in the foregoing method embodiments, which will not be described in detail again herein. It should be noted that, the functions of various modules (sub-modules, units, or assemblies, etc.) in the first device 1000 and the first device 1100 described in embodiments of the disclosure may be implemented by different modules (sub-modules, units, or assemblies, etc.), or may be implemented by the same module (sub-module, unit, or assembly, etc.).

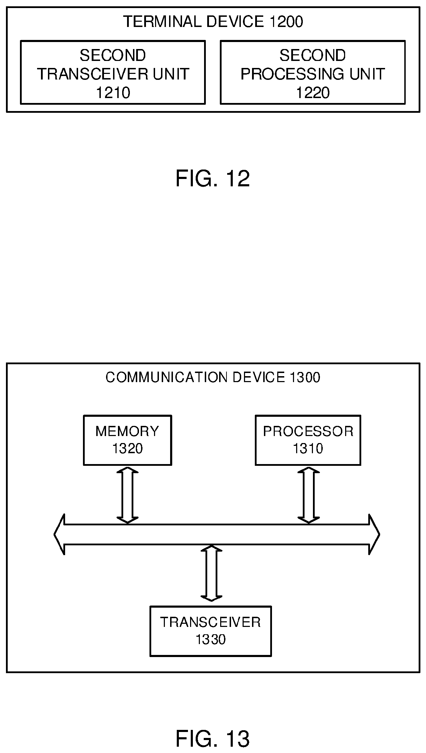

FIG. 12 is a schematic block diagram of a terminal device 1200 according to an embodiment of the disclosure. The terminal device 1200 can include: a second transceiver unit 1210 and a second processing unit 1220. The second transceiver unit 1210 is configured to receive first information sent by a first device, where the first information carries indication information. The second processing unit 1220 is configured to determine, according to the indication information, whether to perform information reporting or not to perform information reporting.

In some implementations, the indication information includes first indication information, and the first indication information indicates index information corresponding to the first information.

In some implementations, the indication information includes second indication information, and the second indication information indicates whether the first information is first information that is initially transmitted.

In some implementations, the second transceiver unit 1210 is configured to receive a first sequence sent by the first device, where the first sequence corresponds to the first information.

In some implementations, the first sequence is determined based on one or more of: first indication information, second indication information, information of a time-domain resource where the first information is located, or a type of the first information. The first indication information indicates index information corresponding to the first information. The second indication information indicates whether the first information is first information that is initially transmitted.

In some implementations, the type of the first information includes one or more of inbound inventory counting information, outbound inventory counting information, or stock inventory counting information.

In some implementations, the index information corresponding to the first information is associated with a query round which the first information belongs to.

In some implementations, the second processing unit 1320 is configured to determine, according to the first indication information, whether index information indicated by the first indication information is the same as index information indicated by first indication information in previous first information, and performing or not performing information reporting based on a determination result.

In some implementations, the second processing unit 1220 is configured to: perform information reporting if the determination result indicates that the index information indicated by the first indication information is different from the index information indicated by the first indication information in the previous first information; or not perform information reporting if the determination result indicates that the index information indicated by the first indication information is the same as the index information indicated by the first indication information in the previous first information and the terminal device has received ACK information before the first information; or perform information reporting if the determination result the determination result indicates that the index information indicated by the first indication information is the same as the index information indicated by the first indication information in the previous first information and the terminal device has not received ACK information before the first information. The ACK information and the first information correspond to the same query round.

In some implementations, if a value of the second indication information is a first value, the first information is first information that is initially transmitted. Additionally or alternatively, if the value of the second indication information is a second value, the first information is not first information that is initially transmitted.

In some implementations, if the second indication information in the first information is the same as second indication information in previous first information, the first information is not first information that is initially transmitted. Additionally or alternatively, if the second indication information in the first information is different from the second indication information in the previous first information, the first information is first information that is initially transmitted.

In some implementations, the first information that is initially transmitted corresponds to first information transmitted for the first time in one query round.

In some implementations, the terminal device determines, according to the indication information, whether to perform information reporting or not to perform information reporting as follows. The terminal device performs information reporting in a case that the first information is first information that is initially transmitted. Alternatively, the terminal device does not perform information reporting in a case that the first information is not first information that is initially transmitted and the terminal device has received ACK information before the first information. Alternatively, the terminal device performs information reporting in a case that the first information is not first information that is initially transmitted and the terminal device has not received ACK information before the first information. The ACK information and the first information correspond to the same query round.

In some implementations, the indication information includes first ID information, and the first ID information corresponds to one or more terminal devices.

In some implementations, the second processing unit 1220 is configured to: determine whether the first ID information corresponds to the terminal device; and perform information reporting if the first ID information corresponds to the terminal device and/or not perform information reporting if the first ID information does not correspond to the terminal device.

In some implementations, the second transceiver unit 1210 is further configured to receive first configuration information sent by the first device. The second processing unit 1220 is further configured to determine first ID information corresponding to the terminal device according to the first configuration information.

In some implementations, the first configuration information indicates a manner for determining the first ID information.

In some implementations, the first configuration information indicates one or more of: a first information field in ID information of the terminal device or one or more bits in the first information field, where the first information field is used for determining the first ID information. The ID information of the terminal device has at least one information field.

In some implementations, the first configuration information carries N pieces of information, the *N* pieces of information are in one-to-one correspondence with *N* information fields in the ID information of the terminal device, and each piece of information indicates a bit in a corresponding information field, where the bit is used for determining the first ID information, where *N* is a positive integer.

In some implementations, the second transceiver unit 1210 is further configured to receive second configuration information sent by the first device. The second processing unit 1220 is further configured to determine a first time range according to the second configuration information.

In some implementations, the second processing unit 1220 is configured to: not perform information reporting in a case that the first information has been received within the first time range and information reporting has already been performed within the first time range; not perform information reporting in a case that the first information has been received within the first time range and ACK information has already been received within the first time range; perform information reporting in a case that the first information has been received within the first time range and information reporting has not been performed within the first time range; or perform information reporting in a case that the first information has been received within the first time range and ACK information has not been received within the first time range.

In some implementations, the terminal device includes an A-IoT device.

In some implementations, the first device includes a network device or an intermediate node.

In some implementations, the intermediate node includes a terminal device.

In some implementations, the first information includes one or more of query information, QueryRep information, paging information, or trigger information.

The terminal device 1200 in embodiments of the disclosure can implement corresponding functions of the terminal device in the foregoing method embodiments. For the procedure, function, implementation, and advantage corresponding to each module (sub-module, unit, or assembly, etc.) in the terminal device 1200, reference can be made to the corresponding illustrations in the foregoing method embodiments, which will not be described in detail again herein. It should be noted that, the functions of various modules (sub-modules, units, or assemblies, etc.) in the terminal device 1200 described in embodiments of the disclosure may be implemented by different modules (sub-modules, units, or assemblies, etc.), or may be implemented by the same module (sub-module, unit, or assembly, etc.).

FIG. 13 is a schematic structural diagram of a communication device 1300 according to embodiments of the disclosure. The communication device 1300 illustrated in FIG. 13 includes a processor 1310. The processor 1310 can invoke and execute computer programs stored in a memory, to cause the communication device 1300 to implement the method in embodiments of the disclosure.

In an implementation, as illustrated in FIG. 13, the communication device 1300 may further include a memory 1320, where the processor 1310 can invoke and execute computer programs stored in the memory 1320 to implement the method in embodiments of the disclosure.

The memory 1320 may be a separate device independent of the processor 1310, or may be integrated into the processor 1310.

In an implementation, as illustrated in FIG. 13, the communication device 1300 may further include a transceiver 1330. The processor 1310 can control the transceiver 1330 to communicate with other devices, and specifically, to send information or data to other devices or receive information or data sent by other devices.

The transceiver 1330 may include a transmitter and a receiver. The transceiver 1330 can further include an antenna, where one or more antennas may be provided.

In an implementation, the communication device 1300 may specifically be a terminal device in embodiments of the disclosure, and the communication device 1300 may implement corresponding operations implemented by the terminal device in various methods in embodiments of the disclosure, which will not be described again herein for the sake of brevity.

In an implementation, the communication device 1300 may specifically be a first device in embodiments of the disclosure, and the communication device 1300 may implement corresponding operations implemented by the first device in various methods in embodiments of the disclosure, which will not be described again herein for the sake of brevity.

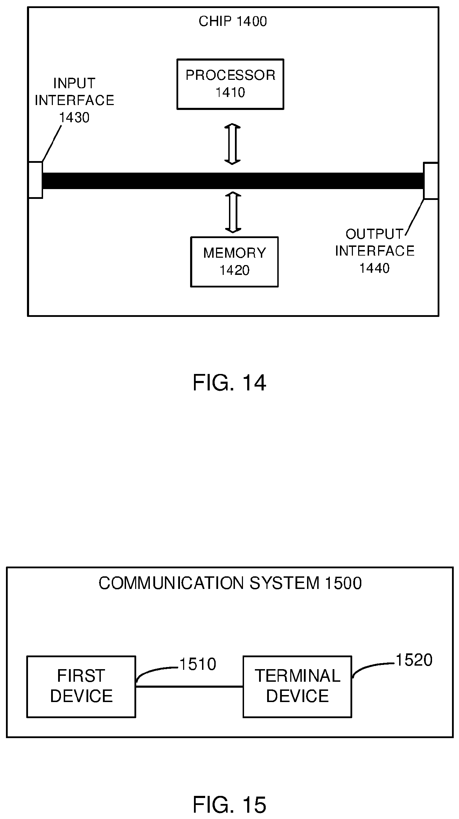

FIG. 14 is a schematic structural diagram of a chip according to embodiments of the disclosure. The chip 1400 illustrated in FIG. 14 includes a processor 1410. The processor 1410 can invoke and execute computer programs stored in a memory, so as to implement the method in embodiments of the disclosure.

In an implementation, as illustrated in FIG. 14, the chip 1400 may further include a memory 1420. The processor 1410 can invoke and execute computer programs stored in the memory 1420, so as to implement the method performed by the first device or the terminal device in embodiments of the disclosure.

The memory 1420 may be a separate device independent of the processor 1410, or may be integrated into the processor 1410.

In an implementation, the chip 1400 may further include an input interface 1430. The processor 1410 can control the input interface 1430 to communicate with other devices or chips, and specifically, to obtain information or data sent by other devices or chips.

In an implementation, the chip 1400 may further include an output interface 1440. The processor 1410 can control the output interface 1440 to communicate with other devices or chips, and specifically, to output information or data to other devices or chips.

In an implementation, the chip may be applied to the terminal device in embodiments of the disclosure, and the chip may implement corresponding operations implemented by the terminal device in various methods in embodiments of the disclosure, which will not be described again herein for the sake of brevity.

In an implementation, the chip may be applied to the first device in embodiments of the disclosure, and the chip may implement corresponding operations implemented by the first device in various methods in embodiments of the disclosure, which will not be described again herein for the sake of brevity.

The chip applied to the terminal device and the chip applied to the first device may be the same chip or different chips.

Optionally, the chip in embodiments of the disclosure may also be a system-on-chip (SOC).

The processor described above may be a general-purpose processor, a digital signal processor (DSP), a field programmable gate array (FPGA), an application specific integrated circuit (ASIC), or other programmable logic devices, transistor logic devices, discrete hardware components. The general-purpose processor may be a microprocessor, or the processor may be any conventional processor or the like.

The memory described above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or flash memory. The volatile memory can be a random access memory (RAM).

It should be understood that, the memory above is intended for illustration rather than limitation. For example, the memory in embodiments of the disclosure may also be an SRAM, a DRAM, an SDRAM, a DDR SDRAM, an ESDRAM, an SLDRAM, a DR RAM, etc. In other words, the memory in embodiments of the disclosure is intended to include, but is not limited to, these and any other suitable types of memory.

FIG. 15 is a schematic block diagram of a communication system 1500 according to embodiments of the disclosure. The communication system 1500 includes a first communication device 1510 and a terminal device 1520.

The first device 1510 is configured to send first information to the terminal device, where the first information carries indication information for the terminal device to determine, according to the indication information, whether to perform information reporting or not to perform information reporting.

The terminal device 1520 is configured to: receive the first information sent by the first device, where the first information carries the indication information; and determine, according to the indication information, whether to perform information reporting or not to perform information reporting.

Here, the first device 1510 can be used to implement the corresponding functions performed by the first device in the foregoing method, and the terminal device 1520 can be used to implement the corresponding functions performed by the terminal device in the foregoing method. For brevity, details are not repeated herein.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should be understood that, in various embodiments of the disclosure, the magnitude of a sequence number of each of the foregoing processes does not imply an execution order, and the execution order between the processes should be determined according to function and internal logic thereof, which shall not constitute any limitation to the implementation of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. An information transmission method, comprising:
sending, by a first device, first information to a terminal device, wherein the first information carries indication information for the terminal device to determine, according to the indication information, whether to perform information reporting or not to perform information reporting.

2. The method of claim 1, wherein the indication information comprises first indication information, and the first indication information indicates index information corresponding to the first information.

3. The method of claim 1 or 2, wherein the indication information comprises second indication information, and the second indication information indicates whether the first information is first information that is initially transmitted.

4. The method of claim 1, wherein sending, by the first device, the first information to the terminal device comprises:
determining, by the first device, a first sequence corresponding to the first information; and
sending, by the first device, the first sequence to the terminal device.

5. The method of claim 4, wherein the first device determines the first sequence corresponding to the first information based on one or more of:
first indication information, wherein the first indication information indicates index information corresponding to the first information;
second indication information, wherein the second indication information indicates whether the first information is first information that is initially transmitted;
information of a time-domain resource where the first information is located; or
a type of the first information.

6. The method of claim 5, wherein the type of the first information comprises one or more of inbound inventory counting information, outbound inventory counting information, or stock inventory counting information.

7. The method of claim 2 or 5, wherein the index information corresponding to the first information is associated with a query round which the first information belongs to.

8. The method of claim 3, 5, or 6, wherein
when a value of the second indication information is a first value, the first information is first information that is initially transmitted; and/or
when the value of the second indication information is a second value, the first information is not first information that is initially transmitted.

9. The method of claim 3, 5, or 6, wherein
when the second indication information in the first information is the same as second indication information in previous first information, the first information is first information that is retransmitted; and/or
when the second indication information in the first information is different from the second indication information in the previous first information, the first information is first information that is initially transmitted.

10. The method of claim 3, 5, 6, 8, or 9, wherein the first information that is initially transmitted corresponds to first information transmitted for the first time in one query round.

11. The method of claim 9, wherein the first information that is retransmitted corresponds to first information in one query round other than first information transmitted for the first time in the query round.

12. The method of claim 1, wherein the indication information comprises first identity (ID) information, and the first ID information corresponds to one or more terminal devices.

13. The method of claim 12, wherein when the first ID information corresponds to a terminal device which has received the first information, the terminal device performs information reporting.

14. The method of claim 12, wherein when the first ID information does not correspond to a terminal device which has received the first information, the terminal device does not perform information reporting.

15. The method of any of claims 12 to 14, further comprising:
determining, by the first device, the first ID information according to ID information of a terminal device.

16. The method of any of claims 12 to 15, further comprising:
sending, by the first device, first configuration information to the terminal device, wherein the first configuration information is used for the terminal device to determine first ID information corresponding to the terminal device.

17. The method of claim 16, wherein the first configuration information indicates a manner for determining the first ID information.

18. The method of claim 17, wherein the first configuration information indicates one or more of:
a first information field in ID information of the terminal device, wherein the first information field is used for determining the first ID information; or
one or more bits in the first information field,
wherein the ID information of the terminal device has at least one information field.

19. The method of claim 18, wherein the first configuration information carries N pieces of information, the N pieces of information are in one-to-one correspondence with N information fields in the ID information of the terminal device, and each piece of information indicates a bit in a corresponding information field, wherein the bit is used for determining the first ID information, wherein N is a positive integer.

20. The method of claim 1, further comprising:
sending, by the first device, second configuration information to the terminal device, wherein the second configuration information is used for the terminal device to determine a first time range.

21. The method of claim 20, wherein the second configuration information is used for the terminal device to determine whether to perform information reporting or not to perform information reporting in one or more of the following cases:
not performing information reporting in a case that the terminal device receives the first information within the first time range and has already performed information reporting within the first time range;
not performing information reporting in a case that the terminal device receives the first information within the first time range and has already received acknowledgement (ACK) information within the first time range;
performing information reporting in a case that the terminal device receives the first information within the first time range and has not performed information reporting within the first time range; or
performing information reporting in a case that the terminal device receives the first information within the first time range and has not received ACK information within the first time range.

22. The method of any of claims 1 to 21, wherein the terminal device comprises an ambient internet of things (A-IoT) device.

23. The method of any of claims 1 to 22, wherein the first device comprises a network device or an intermediate node.

24. The method of claim 23, wherein the intermediate node comprises a terminal device.

25. The method of any of claims 1 to 24, wherein the first information comprises one or more of query information, query repeat (QueryRep) information, paging information, or trigger information.

26. An information transmission method, comprising:
receiving, by a terminal device, first information sent by a first device, wherein the first information carries indication information; and
determining according to the indication information, by the terminal device, whether to perform information reporting or not to perform information reporting.

27. The method of claim 26, wherein the indication information comprises first indication information, and the first indication information indicates index information corresponding to the first information.

28. The method of claim 26 or 27, wherein the indication information comprises second indication information, and the second indication information indicates whether the first information is first information that is initially transmitted.

29. The method of claim 26, wherein receiving, by the terminal device, the first information sent by the first device comprises:
receiving, by the terminal device, a first sequence sent by the first device, wherein the first sequence corresponds to the first information.

30. The method of claim 29, wherein the first sequence is determined based on one or more of:
first indication information, wherein the first indication information indicates index information corresponding to the first information;
second indication information, wherein the second indication information indicates whether the first information is first information that is initially transmitted;
information of a time-domain resource where the first information is located; or
a type of the first information.

31. The method of claim 30, wherein the type of the first information comprises one or more of inbound inventory counting information, outbound inventory counting information, or stock inventory counting information.

32. The method of claim 27 or 30, wherein the index information corresponding to the first information is associated with a query round which the first information belongs to.

33. The method of any of claims 27, 30, and 32, wherein determining according to the indication information, by the terminal device, whether to perform information reporting or not to perform information reporting comprises:
determining according to the first indication information, by the terminal device, whether index information indicated by the first indication information is the same as index information indicated by first indication information in previous first information, and performing or not performing information reporting based on a determination result.

34. The method of claim 33, wherein performing or not performing information reporting based on the determination result comprises:
performing information reporting when the determination result indicates that the index information indicated by the first indication information is different from the index information indicated by the first indication information in the previous first information; or
not performing information reporting when the determination result indicates that the index information indicated by the first indication information is the same as the index information indicated by the first indication information in the previous first information and the terminal device has received acknowledgement (ACK) information before the first information; or
performing information reporting when the determination result the determination result indicates that the index information indicated by the first indication information is the same as the index information indicated by the first indication information in the previous first information and the terminal device has not received ACK information before the first information;
wherein the ACK information and the first information correspond to the same query round.

35. The method of claim 28, 30, or 31, wherein
when a value of the second indication information is a first value, the first information is first information that is initially transmitted; and/or
when the value of the second indication information is a second value, the first information is not first information that is initially transmitted.

36. The method of claim 28, 30, or 31, wherein
when the second indication information in the first information is the same as second indication information in previous first information, the first information is not first information that is initially transmitted; and/or
when the second indication information in the first information is different from the second indication information in the previous first information, the first information is first information that is initially transmitted.

37. The method of claim 28, 30, 31, 35, or 36, wherein the first information that is initially transmitted corresponds to first information transmitted for the first time in one query round.

38. The method of any of claims 28, 30, 31, 35, 36, and 37, wherein determining according to the indication information, by the terminal device, whether to perform information reporting or not to perform information reporting comprises:
performing information reporting in a case that the first information is first information that is initially transmitted; or
not performing information reporting in a case that the first information is not first information that is initially transmitted and the terminal device has received ACK information before the first information; or
performing information reporting in a case that the first information is not first information that is initially transmitted and the terminal device has not received ACK information before the first information;
wherein the ACK information and the first information correspond to the same query round.

39. The method of claim 26, wherein the indication information comprises first identity (ID) information, and the first ID information corresponds to one or more terminal devices.

40. The method of claim 39, wherein determining according to the indication information, by the terminal device, whether to perform information reporting or not to perform information reporting comprises:
determining, by the terminal device, whether the first ID information corresponds to the terminal device; and
performing information reporting when the first ID information corresponds to the terminal device; and/or
not performing information reporting when the first ID information does not correspond to the terminal device.

41. The method of claim 39, further comprising:
receiving, by the terminal device, first configuration information sent by the first device; and
determining, by the terminal device, first ID information corresponding to the terminal device according to the first configuration information.

42. The method of claim 41, wherein the first configuration information indicates a manner for determining the first ID information.

43. The method of claim 42, wherein the first configuration information indicates one or more of:
a first information field in ID information of the terminal device, wherein the first information field is used for determining the first ID information; or
one or more bits in the first information field,
wherein the ID information of the terminal device has at least one information field.

44. The method of claim 43, wherein the first configuration information carries N pieces of information, the N pieces of information are in one-to-one correspondence with N information fields in the ID information of the terminal device, and each piece of information indicates a bit in a corresponding information field, wherein the bit is used for determining the first ID information, wherein *N* is a positive integer.

45. The method of claim 26, further comprising:
receiving, by the terminal device, second configuration information sent by the first device; and
determining, by the terminal device, a first time range according to the second configuration information.

46. The method of claim 45, wherein determining according to the indication information, by the terminal device, whether to perform information reporting or not to perform information reporting comprises:
not performing, by the terminal device, information reporting in a case that the terminal device receives the first information within the first time range and has already performed information reporting within the first time range;
not performing, by the terminal device, information reporting in a case that the terminal device receives the first information within the first time range and has already received ACK information within the first time range;
performing, by the terminal device, information reporting in a case that the terminal device receives the first information within the first time range and has not performed information reporting within the first time range; or
performing, by the terminal device, information reporting in a case that the terminal device receives the first information within the first time range and has not received ACK information within the first time range.

47. The method of any of claims 26 to 46, wherein the terminal device comprises an ambient internet of things (A-IoT) device.

48. The method of any of claims 26 to 47, wherein the first device comprises a network device or an intermediate node.

49. The method of claim 48, wherein the intermediate node comprises a terminal device.

50. The method of any of claims 26 to 49, wherein the first information comprises one or more of query information, query repeat (QueryRep) information, paging information, or trigger information.

51. A first device, comprising:
a first transceiver unit, configured to send first information to a terminal device, wherein the first information carries indication information for the terminal device to determine, according to the indication information, whether to perform information reporting or not to perform information reporting.

52. A terminal device, comprising:
a second transceiver unit configured to receive first information sent by a first device, wherein the first information carries indication information; and
a second processing unit configured to determine, according to the indication information, whether to perform information reporting or not to perform information reporting.

53. A device, comprising:
a memory is configured to store computer programs;
a transceiver is configured to communicate with other devices; and
a processor is configured to invoke and execute the computer programs stored in the memory, to cause the terminal to perform the method of any of claims 1 to 50.

54. A chip, comprising:
a processor, configured to invoke and execute computer programs from a memory, to cause a device equipped with the chip to perform the method of any of claims 1 to 50.

55. A computer-readable storage medium, configured to store computer programs which, when executed by a device, are operable with the device to perform the method of any of claims 1 to 50.

56. A computer program product, comprising computer program instructions which are operable with a computer to perform the method of any of claims 1 to 50.

57. A computer program which, operable with a computer to perform the method of any of claims 1 to 50.
